# DEMANDE DE BREVET EUROPEEN

(11) **EP 1 247 439 A1**
(43) Date de publication de la demande: **09.10.2002**
(21) Numéro de dépôt: 02360113.1
(22) Date de dépôt: 02.04.2002
(51) Int. Cl.: A01D 43/10

(54) **Machine de récolte de fourrage**

(30) Priorité: 06.04.2001 FR 0104792
(71) Demandeur: KUHN S.A., 67706 Saverne Cedex (FR)
(72) Inventeur: Wattron, Bernard, 67700 Haegen (FR); Walch, Martin, 67490 Dettwiller (FR)
(74) Mandataire: Andres, Jean-Claude

(57) **Abrégé**

La présente invention se rapporte à une machine de récolte de fourrage, comportant notamment un mécanisme de coupe (5) et un dispositif de traitement (11) des produits coupés, lequel comprend au moins deux rouleaux nervurés (12, 13) qui sont entraînés en rotation par des moyens de transmission (19) comprenant au moins un élément flexible (20, 28) qui coopère avec un organe menant (21) et des organes menés (23, 24, 27, 29) qui sont montés sur des arbres (16, 26, 18) qui assurent l'entraînement en rotation des rouleaux (12, 13).

Elle est remarquable en ce que au moins un des organes menés (23, 24, 27, 29) est monté sur son arbre (16, 26, 18) au moyen d'une roue libre (30) à entraînement dans un sens unique.

## Description

La présente invention se rapporte à une machine de récolte de fourrage, comportant notamment un bâti support, un mécanisme de coupe et un dispositif de traitement destiné à traiter les produits coupés par ledit mécanisme de coupe et comprenant au moins deux rouleaux nervurés qui sont entraînés en rotation par des moyens de transmission comprenant au moins un élément flexible qui coopère avec un organe menant et des organes menés qui sont montés sur des arbres qui assurent l'entraînement en rotation des rouleaux.

Une telle machine permet de couper de l'herbe et de la traiter immédiatement après la coupe en la faisant passer entre les deux rouleaux en vue d'accélérer son séchage. Lors de ce passage entre ces rouleaux, les nervures qui se situent sur leurs périphéries compriment l'herbe et fragmentent les pellicules protectrices qui enveloppent les tiges. L'humidité contenue dans ces tiges s'évapore alors beaucoup plus rapidement.

Sur une machine connue de ce genre, les deux rouleaux sont entraînés à la même vitesse de rotation au moyen de chaînes de transmission qui passent sur des roues dentées. Les nervures de ces rouleaux doivent engrener de manière à obtenir des pincements rapprochés des tiges pour augmenter l'intensité du traitement.

Néanmoins, les défauts de forme de ces rouleaux et les inévitables imperfections de la synchronisation entre les deux rouleaux engendrent des à-coups et des saccades au niveau de leur entraînement. Ces à-coups et saccades provoquent des surcharges sur les chaînes de transmission qui subissent une importante usure. Ils provoquent en sus des vibrations qui sont néfastes à la structure porteuse et notamment aux paliers de guidage des rouleaux.

La présente invention à pour but de remédier d'une manière simple aux inconvénients précités de la machine connue.

A cet effet, une importante caractéristique de l'invention consiste en ce que au moins un des organes menés des moyens de transmission qui entraînent les rouleaux est monté sur son arbre au moyen d'une roue libre à entraînement dans un sens unique. Un tel agencement confère au rouleau correspondant la possibilité de s'adapter de lui-même à l'autre rouleau. Leurs nervures opèrent alors un engrènement progressif et régulier durant la rotation. Cela permet d'éviter les dysfonctionnements dus aux défauts de forme et de synchronisation entre les rouleaux.

Une telle roue libre peut être associée à l'organe mené d'un seul rouleau ou aux organes menés de chacun des deux rouleaux. Dans ce dernier cas, les rouleaux peuvent compenser les défauts de forme et de synchronisation dans les deux sens.

Selon une autre caractéristique de l'invention, un des rouleaux est entraîné à une vitesse de rotation supérieure à la vitesse de rotation de l'autre rotor. La synchronisation entre les rouleaux se fait alors par le contact entre leurs nervures et non plus uniquement à travers les moyens de transmission. Ces derniers peuvent être constitués par des éléments simples tels que des courroies et des poulies.

D'autres caractéristiques et avantages de l'invention ressortiront de la description ci après d'un exemple de réalisation non limitatif de l'invention, avec référence aux dessins annexés dans lesquels :
- La figure 1 représente en coupe partielle une machine selon l'invention,
- La figure 2 représente une vue de détail d'un autre exemple de réalisation des moyens de transmission,
- La figure 3 représente en coupe partielle un exemple de réalisation d'une roue libre,
- La figure 4 représente un autre exemple de réalisation d'une roue libre,
- La figure 5 représente une vue de détail d'un autre exemple de réalisation des moyens de transmission.

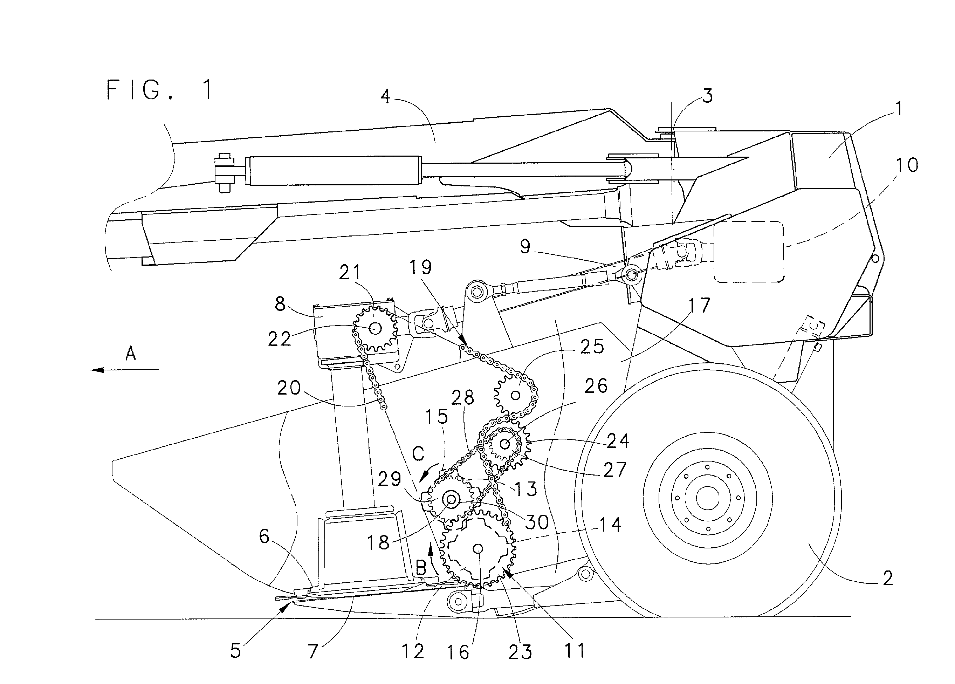

Telle qu'elle est représentée sur la figure 1, la machine de récolte selon l'invention comporte un bâti support (1) en forme de U renversé et équipé de deux roues d'appui (2). Sur ce bâti (1) est articulé, au moyen d'un axe (3) sensiblement vertical, un timon (4) permettant l'accrochage à un tracteur. Celui-ci sert à animer et à déplacer la machine dans la direction d'avancement indiquée par la flèche (A). L'angle formé entre le bâti (1) et le timon (4) peut être modifié par pivotement de ce dernier autour de l'axe (3) sensiblement vertical. Cela permet de transposer ledit bâti (1) dans au moins une position de transport dans laquelle il se situe dans le prolongement du tracteur et au moins une position de travail dans laquelle il est décalé latéralement par rapport au tracteur.

Le bâti (1) porte un mécanisme de coupe (5) apte à suivre les dénivellations du sol. Ce mécanisme (5) se compose d'une pluralité d'outils de coupe tels que des disques (6) qui portent des couteaux et qui sont disposés suivant une ligne sensiblement perpendiculaire à la direction d'avancement (A). Pour la coupe, les disques (6) sont entraînés en rotation autour d'axes dirigés vers le haut, au moyen d'un train d'engrenages logé dans un carter (7) de forme allongée qui se situe sous lesdits disques (6). Le disque (6) situé à une extrémité du carter (7) est entraîné à partir d'un carter de renvoi (8) qui est lui-même relié par un arbre intermédiaire (9) à un carter central (10). Le mouvement d'entraînement peut être transmis à ce carter central (10) à partir d'un arbre de prise de force du tracteur, au moyen d'arbres de transmission non représentés.

Le bâti (1) porte en sus un dispositif de traitement (11) destiné à traiter les produits coupés par le mécanisme de coupe (5). Ce dispositif (11) se situe immédiatement à l'arrière des disques (6). Il comprend au moins deux rouleaux nervurés (12 et 13) s'étendant horizontalement sur pratiquement toute la largeur du mécanisme de coupe (5). Ces rouleaux (12 et 13) sont pressés l'un contre l'autre de sorte que leurs nervures (14 et 15) engrènent. Le premier rouleau (12) comprend un arbre (16) dont les extrémités sont guidées dans des paliers reliés à des parois latérales (17) solidaires du bâti (1). Le deuxième rouleau (13) comprend également un arbre (18) dont les extrémités sont logées dans des paliers liés à des bras articulés sur lesdites parois latérales (17). Cette disposition permet au deuxième rouleau (13) de se déplacer par rapport au premier rouleau (12) en fonction du volume de fourrage à traiter. Les deux rouleaux (12 et 13) sont entraînés en rotation dans des sens convergents à l'avant, comme cela est indiqué par les flèches (B) et (C). Cet entraînement est assuré par des moyens de transmission (19) qui comprennent au moins un élément flexible (20) qui passe sur un organe menant (21) monté sur un arbre (22) débouchant du carter de renvoi (8). L'élément flexible (20) passe également sur un premier et un deuxième organe mené (23 et 24) et sur un organe (25) déplaçable en vue de régler sa tension. Le premier organe mené (23) est monté sur l'arbre (16) du premier rouleau (12). Le deuxième organe mené (24) est monté sur un arbre (26) qui porte un troisième organe mené (27) sur lequel passe un élément flexible supplémentaire (28). Celui-ci passe en sus sur un quatrième organe mené (29) qui est monté sur l'arbre (18) qui est lié au deuxième rouleau (13).

Ledit élément flexible supplémentaire (28) pourrait être remplacé par un autre moyen tel qu'une cascade d'engrenages qui assure la liaison entre le troisième organe mené (27) et le quatrième organe mené (29). Il est également possible de prévoir une telle cascade d'engrenages entre le premier rouleau (12) et le premier organe mené (23) si ce dernier ne peut pas être monté directement sur l'arbre (16) dudit premier rouleau (12).

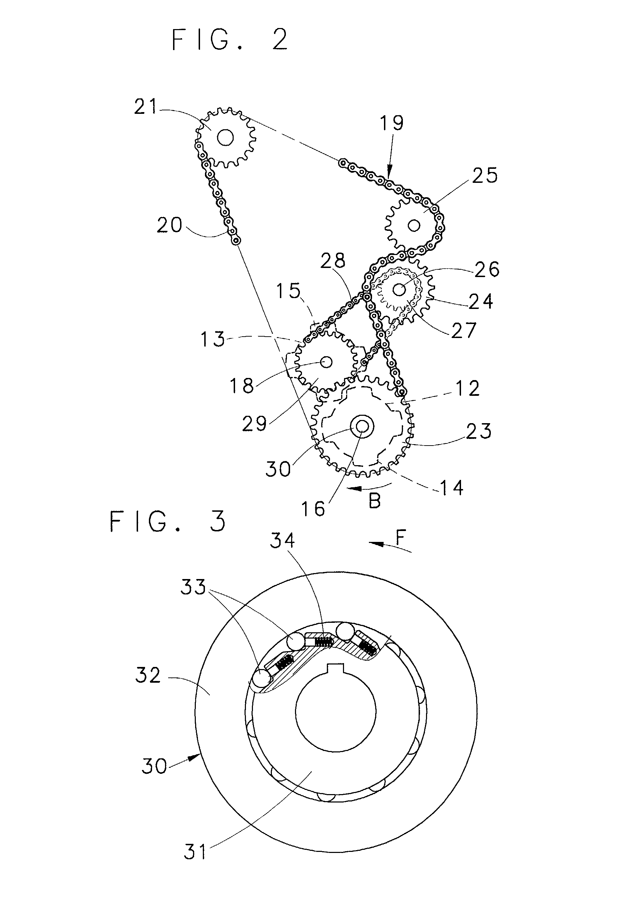

Selon l'invention, l'un au moins de ces organes menés (23, 24, 27 ou 29) est monté sur son arbre (16, 18 ou 26) au moyen d'une roue libre (30) à entraînement dans un sens unique. Cet agencement permet de corriger automatiquement les défauts de forme et de synchronisation entre les rouleaux (12 et 13) afin d'éviter les vibrations qu'ils pourraient engendrer. Comme cela ressort de l'exemple représenté sur la figure 3, la roue libre (30) se compose, d'une manière connue en soi, notamment d'une bague intérieure (31) qui est solidaire de l'arbre sur lequel elle est montée et d'une bague extérieure (32) sur laquelle se monte l'organe mené correspondant. Entre les deux bagues (31 et 32) sont logés des entraîneurs cylindriques (33) poussés vers l'extérieur par des ressorts (34). Ces entraîneurs (33) se coincent entre lesdites bagues (31 et 32) et assurent la transmission du mouvement de rotation de la bague extérieure (32) à la bague intérieure (31) lorsqu'elle tourne dans le sens de la flèche (F). Par contre, les entraîneurs cylindriques (33) se décoincent lorsque le sens de rotation de la bague extérieure (32) est inversé ou lorsque la bague intérieure (31) tourne plus vite que la bague extérieure (32). Dans un autre exemple de montage, la transmission du mouvement peut également se faire de la bague intérieure (31) vers la bague extérieure (32). Pour cela le sens de rotation doit être contraire à celui indiqué par la flèche (F) ou bien la position de la roue libre (30) doit être inversée.

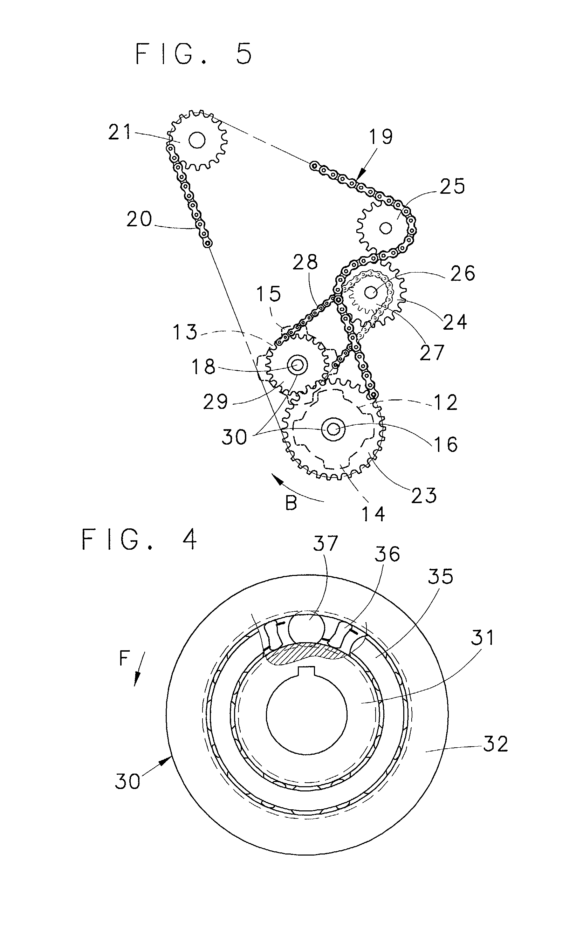

Dans la variante de réalisation de la figure 4, la roue libre (30) comporte entre la bague intérieure (31) et la bague extérieure (32) une cage (35) avec en alternance des cames (36) et des billes (37). Telles que représentées, les cames (36) transmettent le mouvement de rotation de la bague extérieure (32) à la bague intérieure (31) par frottement lorsque l'ensemble tourne dans le sens de la flèche (F). La bague intérieure (31) peut cependant tourner plus vite que la bague extérieure (32) sans que cela ait une influence sur cette dernière. Les billes (37) assurent le centrage et le guidage entre les bagues (31 et 32) lorsque l'une tourne par rapport à l'autre.

Dans l'exemple de réalisation selon la figure 1, la roue libre (30) se situe entre l'arbre (18) du deuxième rouleau (13) et l'organe mené (29). Ce deuxième rouleau (13) est ainsi entraîné dans le sens de la flèche (C) par la roue libre (30). Le rapport entre les organes menés (23, 24, 27 et 29) qui font tourner les deux rouleaux (12 et 13) peut être tel que ceux-ci tournent normalement à la même vitesse. Le deuxième rouleau (13) à néanmoins la possibilité, grâce à la roue libre (30), de tourner plus vite que le premier rouleau (12) lorsqu'une de ses nervures (15) butte contre une nervure (14) dudit premier rouleau (12). Cela permet au deuxième rouleau (13) de s'ajuster par rapport au premier rouleau (12) en vue d'obtenir un engrènement correct des nervures (14 et 15).

Selon des variantes de réalisation de l'exemple selon la figure 1, la roue libre (30) peut aussi être montée entre le deuxième organe mené (24) ou le troisième organe mené (27) et l'arbre (26) sur lequel ils sont montés.

Dans l'exemple de réalisation représenté sur la figure 2, le premier organe mené (23) est monté au moyen d'une roue libre (30) sur l'arbre (16) du premier rouleau (12). Les deux rouleaux (12 et 13) peuvent alors être entraînés en sens contraires à des vitesses identiques. Le premier rouleau (12) peut néanmoins tourner plus vite que le deuxième rouleau (13) grâce à la roue libre (30). Cela permet aussi à ses nervures (14) de s'ajuster par rapport à celles dudit deuxième rouleau (13) lorsquelles viennent à être décalées.

Dans l'exemple selon la figure la figure 5, le premier organe mené (23) est monté au moyen d'une roue libre (30) sur l'arbre (16) du premier rouleau (12) et le quatrième organe mené (29) est également monté au moyen d'une roue libre (30) sur l'arbre (18) du deuxième rouleau (13). Dans ce cas, les deux rouleaux (12 et 13) peuvent être entraînés en sens contraires à des vitesses sensiblement identiques. Néanmoins chacun peut accélérer sa vitesse pour que ses nervures (14 ou 15) puissent s'ajuster avec celles de l'autre rouleau en vue de parfaire leur engrènement. Il est également possible d'associer la roue libre (30) au deuxième organe mené (24) ou au troisième organe mené (27) au lieu du quatrième organe mené (29). Dans chacun de ces cas les deux rouleaux (12 et 13) peuvent accélérer leur vitesse de rotation pour éviter les vibrations.

L'entraînement des rouleaux (12 et 13) de l'exemple selon la figure 5 peut être tel que la vitesse de rotation à laquelle les moyens de transmission (19) entraînent le premier rouleau (12) soit supérieure à la vitesse à laquelle ils entraînent le deuxième rouleau (13). En conséquence, le deuxième rouleau (13) est essentiellement entraîné par le premier rouleau (12). Leurs nervures (14 et 15) s'ajustent constamment les unes par rapport aux autres, ce qui favorise leur engrènement et permet un fonctionnement sans vibrations ni à-coups. Un montage inverse dans lequel la vitesse d'entraînement du deuxième rouleau (13) est supérieure à celle du premier rouleau (12) est également possible.

Les éléments flexibles (20 et 28) des moyens de transmission (19) peuvent par exemple être constitués par des chaînes. L'organe menant (21) et les organes menés (23, 24, 27 et 29) sont alors constitués par des roues dentées sur lesquelles passent lesdites chaînes. Le rapport entre le nombre de dents de ces roues dentées menées (23, 24, 27 et 29) peut être tel que les deux rouleaux (12 et 13) soient entraînés à la même vitesse.

Dans le cas où, comme cela a été décrit précédemment, un des rouleaux (12 ou 13) est entraîné à une vitesse plus importante que l'autre, il est possible de modifier le rapport entre le nombre de dents du premier organe mené (23) et celui des autres organes menés (24, 27 ou 29). Ainsi, si par exemple le nombre de dents du deuxième organe mené (24) est augmenté, la vitesse d'entraînement du deuxième rouleau (13) sera plus faible que celle du premier rouleau (12).

L'emploi d'une roue libre (30) pour l'entraînement de chaque rouleau (12 et 13) permet à chacun de s'adapter à la vitesse de rotation de l'autre. Il est ainsi possible de supprimer l'entraînement synchrone entre les deux rouleaux (12 et 13). Les éléments flexibles (20 et 28) peuvent alors être constitués par des courroies tandis que l'organe menant (21) et les organes menés (23, 24, 27 et 29) peuvent être constitués par de simples poulies. Cet entraînement par poulies et courroies a un coût inférieur à l'entraînement par chaînes et roues dentées.

Durant le travail, la machine est mise en position latérale et est déplacée dans la direction (A) au moyen du tracteur. Le mécanisme de coupe (5) est abaissé de sorte qu'il suive la surface du sol. Les disques (6) sont entraînés en rotation et coupent l'herbe située devant la machine. Celle-ci passe immédiatement entre les rouleaux (12 et 13) qui sont entraînés en rotation par les moyens de transmission (19) de manière à tourner dans le sens des flèches (B et C). Dans l'exemple de la figure 1 et dans les variantes décrites, l'élément flexible (20) entraîne le premier rouleau (12) par l'intermédiaire de l'organe mené (23). Il entraîne également le deuxième organe mené (24), lequel entraîne l'arbre (26) et le troisième organe mené (27). Ce dernier transmet le mouvement au quatrième organe mené (29) et au deuxième rouleau (13) par l'intermédiaire de l'élément flexible supplémentaire (28). Grâce à leurs nervures (14 et 15), les deux rouleaux (12 et 13) compriment l'herbe et fragmentent les pellicules protectrices qui enveloppent les tiges. Ce fourrage retombe ensuite sur le sol et sèche rapidement du fait que l'humidité sort par les ouvertures créées dans les pellicules protectrices.

Au cas où les nervures (14 et 15) des deux rouleaux (12 et 13) venaient à être légèrement décalées les unes par rapport aux autres, le deuxième rouleau (13) peut tourner plus rapidement grâce à la roue libre (30). Ses nervures (15) peuvent alors s'ajuster avec celles du premier rouleau (12) afin de parfaire leur engrènement. Cela permet d'éviter les vibrations et les chocs que pourraient provoquer les nervures (14 et 15) qui se rencontrent.

Dans l'exemple de réalisation selon la figure 2, la roue libre (30) permet aux nervures (14) du premier rouleau (12) de s'ajuster suivant celles du deuxième rouleau (13) en vue d'éviter les chocs et les vibrations.

Dans l'exemple de réalisation selon la figure 5 les deux rouleaux (12 et 13) s'ajustent constamment entre eux grâce à leurs roues libres (30), pour permettre à leurs nervures (14 et 15) d'engrener correctement.

Dans le cas où un des rouleaux (12 ou 13) est entraîné à une vitesse supérieure à celle de l'autre, celui qui tourne plus vite entraîne l'autre par l'intermédiaire des nervures (14 et 15) qui s'ajustent alors constamment.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Machine de récolte de fourrage, comportant notamment un bâti support (1), un mécanisme de coupe (5) et un dispositif de traitement (11) destiné à traiter les produits coupés par ledit mécanisme de coupe (5) et comprenant au moins deux rouleaux nervurés (12 et 13) qui sont entraînés en rotation par des moyens de transmission (19) comprenant au moins un élément flexible (20, 28) qui coopère avec un organe menant (21) et des organes menés (23, 24, 27, 29) qui sont montés sur des arbres (16, 26, 18) qui assurent l'entraînement en rotation des rouleaux (12 et 13), ***caractérisée par le fait* qu'**au moins un des organes menés (23, 24, 27, 29) est monté sur son arbre (16, 26, 18) au moyen d'une roue libre (30) à entraînement dans un sens unique.

2. Machine de récolte selon la revendication 1, ***caractérisée par le fait* que** les moyens de transmission (19) sont constitués par un élément flexible (20) qui passe sur l'organe menant (21) ainsi que sur au moins un premier organe mené (23) qui est solidaire d'un arbre (16) lié au premier rouleau (12) et sur un deuxième organe mené (24) qui est monté sur un arbre (26) portant un troisième organe mené (27) sur lequel passe un élément flexible supplémentaire (28) qui passe en sus sur un quatrième organe mené (29) qui est monté sur un arbre (18) lié au deuxième rouleau (13), l'un au moins desdits deuxième, troisième ou quatrième organes menés (24, 27 ou 29) étant monté sur l'arbre (26 ou 18) correspondant au moyen de la roue libre (30) à entraînement dans un sens unique.

3. Machine de récolte selon la revendication 1, ***caractérisée par le fait* que** les moyens de transmission (19) sont constitués par un élément flexible (20) qui passe sur l'organe menant (21) ainsi que sur au moins un premier organe mené (23) qui est monté au moyen de la roue libre (30) sur un arbre (16) qui est lié au premier rouleau (12) et sur un deuxième organe mené (24) qui est monté sur un arbre (26) portant un troisième organe mené (27) sur lequel passe un élément flexible supplémentaire (28) qui passe en sus sur un quatrième organe mené (29) qui est solidaire d'un arbre (18) lié au deuxième rouleau (13).

4. Machine de récolte selon la revendication 1, ***caractérisée par le fait* que** les moyens de transmission (19) sont constitués par un élément flexible (20) qui passe sur l'organe menant (21) ainsi que sur au moins un premier organe mené (23) qui est monté au moyen d'une roue libre (30) sur un arbre (16) qui est lié au premier rouleau (12) et sur un deuxième organe mené (24) qui est monté sur un arbre (26) portant un troisième organe mené (27) sur lequel passe un élément flexible supplémentaire (28) qui passe en sus sur un quatrième organe mené (29) qui est monté sur un arbre (18) lié au deuxième rouleau (13), l'un au moins desdits deuxième, troisième ou quatrième organes menés (24, 27 ou 29) étant montés sur l'arbre (26 ou 18) correspondant au moyen d'une autre roue libre (30) à entraînement dans un sens unique.

5. Machine de récolte selon la revendication 1 ou 4, ***caractérisée par le fait* que** la vitesse de rotation à laquelle les moyens de transmission (19) entraînent le premier rouleau (12) est supérieure à la vitesse à laquelle ils entraînent le deuxième rouleau (13).

6. Machine selon l'une quelconque des revendications précédentes, ***caractérisée par le fait* que** les roues libres (30) comportent des pièces d'entraînement (33) qui sont actives dans un sens de rotation et qui s'escamotent dans le sens de rotation contraire.

7. Machine selon l'une quelconque des revendications 1 à 5, ***caractérisée par le fait* que** les roues libres (30) comportent des pièces d'entraînement (36) qui sont actives dans un sens de rotation et s'escamotent dans le sens contraire et qui sont combinées à des billes de roulement (37).

8. Machine selon l'une quelconque des revendications précédentes, ***caractérisée par le fait* que** les moyens de transmission (19) comportent des éléments flexibles (20 et 28) constitués par des chaînes et des organes menants et menés (21, 23, 24, 27, 29, 25) constitués par des roues dentées.

9. Machine selon l'une quelconque des revendications 1 à 7, ***caractérisée par le fait* que** les moyens de transmission (19) comportent des éléments flexibles (20 et 28) constitués par des courroies et des organes menants et menés (21, 23, 24, 27, 29, 25) constitués par des poulies.
